# EUROPEAN PATENT APPLICATION

(11) **EP 4 434 942 A1**
(43) Date of publication of application: **25.09.2024**
(21) Application number: 24161006.2
(22) Date of filing: 01.03.2024
(51) Int. Cl.: C01G 53/00, H01M 4/131, H01M 4/505, H01M 4/525

(54) **POSITIVE ELECTRODE ACTIVE MATERIAL PARTICLE, MANUFACTURING METHOD FOR POSITIVE ELECTRODE ACTIVE MATERIAL PARTICLE, AND LITHIUM-ION BATTERY**

(30) Priority: 17.03.2023 JP 2023043303
(71) Applicant: TOYOTA JIDOSHA KABUSHIKI KAISHA, Toyota-shi, Aichi-ken, 471-8571 (JP)
(72) Inventor: YUBUCHI, So, Toyota-shi, 471-8571 (JP); YOSHIDA, Jun, Toyota-shi, 471-8571 (JP); MORIMOTO, Masahiro, Toyota-shi, 471-8571 (JP)
(74) Representative: D Young & Co LLP

(57) **Abstract**

Disclosed is a positive electrode active material particle having an O2-type structure and having excellent rate characteristics and capacity. The positive electrode active material particle of the present disclosure has an O2-type structure, has a chemical composition represented by LiₐNa_{b}Mnₓ₋ₚNi_{y-q}Co_{z-r}M_{p+q+r}O₂, wherein 1.0 < a < 1.30; 0 ≤ b ≤ 0.20; x + y + z = 1; and 0 ≤ p + q + r ≤ 0.15, and M is at least one element selected from B, Mg, Al, K, Ca, Ti, V, Cr, Fe, Cu, Zn, Ga, Ge, Sr, Y, Zr, Nb, Mo, and W, and is spherical.

## Description

### TECHNICAL FIELD

The present application discloses a positive electrode active material particle, a manufacturing method for a positive electrode active material particle, and a manufacturing method for a lithium-ion battery.

### BACKGROUND ART

Positive electrode active materials having an O2-type structure (O: Octahedral) as positive electrode active materials of lithium-ion batteries are known. As disclosed in PTL 1, a positive electrode active material having an O2-type structure can be obtained by ion exchange of at least a portion of Na in a Na-containing transition metal oxide having a P2-type structure with Li.

### CITATION LIST

### PATENT LITERATURE

PTL 1 Japanese Unexamined Patent Publication No. 2014-186937

### SUMMARY

### TECHNICAL PROBLEM

Positive electrode active materials having an O2-type structure have room for improvement in terms of rate characteristics and capacity.

### SOLUTION TO PROBLEM

The present application discloses the following plurality of aspects as means for achieving the above object.

### <Aspect 1>

A positive electrode active material particle:
having an O2-type structure;
having a chemical composition represented by LiₐNa_{b}Mnₓ₋ₚNi_{y-q}Co_{z-r}M_{p+q+r}O₂, where 1.0 < a < 1.30, 0 ≤ b ≤ 0.20, x + y + z = 1, 0 ≤ p + q + r ≤ 0.15, and M is at least one element selected from B, Mg, Al, K, Ca, Ti, V, Cr, Fe, Cu, Zn, Ga, Ge, Sr, Y, Zr, Nb, Mo, and W; and
being spherical.

### <Aspect 2>

The positive electrode active material particle of Aspect 1, wherein
a surface of the particle comprises a plurality of crystallites.

### <Aspect 3>

A manufacturing method for a positive electrode active material particle, the method comprising: obtaining a Na-containing transition metal oxide particle having a P2-type structure, and bringing an ion exchange material into contact with the Na-containing transition metal oxide particle, whereby at least a portion of Na in the Na-containing transition metal oxide particle is substituted with Li, to obtain a Li-containing transition metal oxide particle having an O2-type structure, wherein
the ion exchange material comprises lithium hydroxide and a lithium salt.

### <Aspect 4>

The manufacturing method of Aspect 3, wherein
the Na-containing transition metal oxide particle is spherical, and
the Li-containing transition metal oxide particle is spherical.

### <Aspect 5>

The manufacturing method of Aspect 3 or 4, wherein
the Na-containing transition metal oxide particle has a chemical composition represented by Na_{c}Mnₓ₋ₚNi_{y-q}Co_{z-r}M_{p+q+r}O₂ (0 < c < 0.70; x + y + z = 1; and 0 ≤ p + q + r ≤ 0.15, and M is at least one element selected from B, Mg, Al, K, Ca, Ti, V, Cr, Fe, Cu, Zn, Ga, Ge, Sr, Y, Zr, Nb, Mo, and W).

### <Aspect 6>

The manufacturing method of any of Aspects 3 to 5, the method comprising:
obtaining a precursor particle;
coating a surface of the precursor particle with a Na salt to obtain a coated particle; and firing the coated particle to obtain the Na-containing transition metal oxide particle.

### <Aspect 7>

The manufacturing method of Aspect 6, the method comprising:
coating 40% by area or greater of the surface of the precursor particle with the Na salt to obtain the coated particle, wherein
the precursor particle is spherical.

### <Aspect 8>

A lithium-ion battery comprising a positive electrode active material layer, an electrolyte layer, and a negative electrode active material layer, wherein
the positive electrode active material layer comprises the positive electrode active material particle of Aspect 1 or 2.

### ADVANTAGEOUS EFFECTS OF INVENTION

The positive electrode active material particle of the present disclosure has excellent rate characteristics and capacity.

### BRIEF DESCRIPTION OF DRAWINGS

FIG. 1 is a SEM photo diagram showing one example of the exterior shape of a positive electrode active material particle.
FIG. 2 shows one example of the flow of the manufacturing method for a positive electrode active material particle.
FIG. 3 shows one example of the flow of the manufacturing method of a Na-containing transition metal oxide particle having a P2-type structure.
FIG. 4 schematically shows one example of a configuration of a lithium-ion battery.
FIG. 5 shows one example of the firing conditions when obtaining a Na-containing transition metal oxide particle having a P2-type structure.
FIG. 6A is a SEM photo diagram showing the exterior shape of the positive electrode active material particle according to Example 1.
FIG. 6B is a SEM photo diagram showing the exterior shape of the positive electrode active material particle according to Example 2.
FIG. 6C is a SEM photo diagram showing the exterior shape of the positive electrode active material particle according to Comparative Example 1.
FIG. 6D is a SEM photo diagram showing the exterior shape of the positive electrode active material particle according to Comparative Example 2.
FIG. 6E is a SEM photo diagram showing the exterior shape of the positive electrode active material particle according to Reference Example 1.
FIG. 7 shows X-ray diffraction patterns of the positive electrode active material particle.
FIG. 8A shows an initial charging-discharging curve of the cell according to Example 1.
FIG. 8B shows an initial charging-discharging curve of the cell according to Example 2.
FIG. 8C shows an initial charging-discharging curve of the cell according to Comparative Example 1.
FIG. 8D shows an initial charging-discharging curve of the cell according to Comparative Example 2.
FIG. 8E shows an initial charging-discharging curve of the cell according to Reference Example 1.
FIG. 9 shows the rate characteristics of each cell.

### DESCRIPTION OF EMBODIMENTS

### 1. Positive electrode active material particle

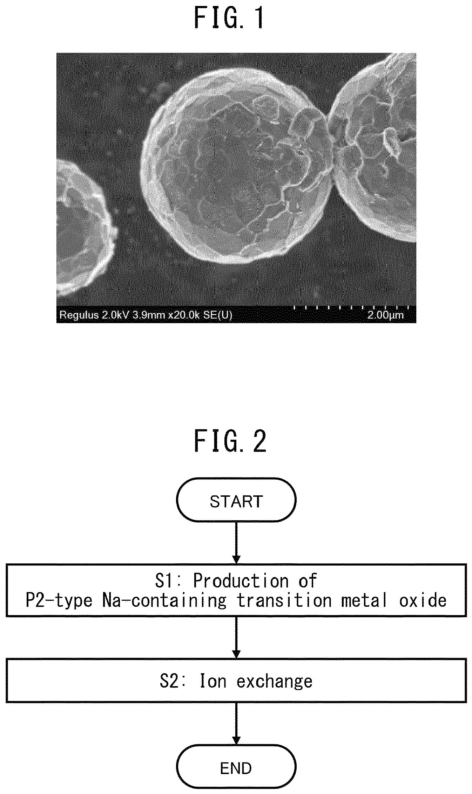

FIG. 1 shows one example of the exterior shape of the positive electrode active material particle according to one embodiment. The positive electrode active material particle according to one embodiment has an O2-type structure, has a chemical composition represented by LiₐNa_{b}Mnₓ₋ₚNi_{y-q}Co_{z-r}M_{p+q+r}O₂ (where 1.0 < a < 1.30; 0 ≤ b ≤ 0.20; x + y + z = 1; and 0 ≤ p + q + r ≤ 0.15, and M is at least one element selected from B, Mg, Al, K, Ca, Ti, V, Cr, Fe, Cu, Zn, Ga, Ge, Sr, Y, Zr, Nb, Mo, and W), and is spherical.

### 1.1 Crystal structure of positive electrode active material particle

The positive electrode active material particle according to one embodiment has at least an O2-type structure (belonging to space group P63mc) as a crystal structure. The positive electrode active material particle may have a crystal structure other than an O2-type structure, in addition to having an O2-type structure. Examples of the crystal structure other than an O2-type structure include a T#2-type structure (belonging to space group Cmca) and an O6-type structure (belonging to space group R-3m, with a c-axis length of 2.5 nm or more and 3.5 nm or less, typically 2.9 nm or more and 3.0 nm or less, and differing from an O3-type structure belonging to the same space group R-3m), formed when Li is deintercalated from an O2-type structure. The positive electrode active material particle may have an O2-type structure as the main phase or may have a crystal structure other than an O2-type structure as the main phase. In the positive electrode active material particle, a crystal structure constituting the main phase can change depending on the charging-discharging state.

The positive electrode active material particle according to one embodiment may be a single crystal consisting of one crystallite, or may be a polycrystal having a plurality of crystallites. As shown in FIG. 1, a surface of the positive electrode active material particle may comprise a plurality of crystallites. When the surface of the positive electrode active material particle has a plurality of crystallites, crystal grain boundaries are present on the surface of the positive electrode active material particle. In this case, the crystal grain boundaries may become entrances and exits for intercalation. Specifically, when the positive electrode active material particle has a plurality of crystallites on the surface thereof, expected effects include a decrease in reaction resistance due to the increased number of intercalation entrances and exits, a decrease in diffusion resistance due to shortened migration distance of lithium ions, and prevention of cracking due to a decrease in absolute quantities of expansion and contraction amounts during charging-discharging.

The size of the crystallites constituting the positive electrode active material particle according to one embodiment may be large or small. However, the smaller the size of the crystallites, the more crystal grain boundaries there are, and the more easily the above advantageous effects are demonstrated. For example, when the diameter of the crystallites constituting the positive electrode active material particle is less than 1 µm, higher performance is easily obtained. Note that "crystallite" and "diameter of crystallite" can be determined by observing the surface of the positive electrode active material particle with a scanning electron microscope (SEM) or a transmission electron microscope (TEM). Specifically, when the surface of the positive electrode active material particle is observed and one of the closed regions surrounded by crystal grain boundaries is observed, the region is regarded as a "crystallite". The maximum Feret diameter of the crystallite is determined, and this is regarded as the "diameter of the crystallite". If the particle consists of a single crystal, the particle itself is considered as one crystallite, and the maximum Feret diameter of the particle is the diameter of the crystallite. Alternatively, the diameter of the crystallite can be determined by EBSD or XRD. For example, the diameter of the crystallite can be determined based on the Scherrer equation from the half-width of the diffraction line of the XRD pattern. When the diameter of the crystallite specified by any of the methods is less than 1 µm in the positive electrode active material particle, higher performance is easily obtained.

The crystallite of the positive electrode active material particle according to one embodiment may have a first surface exposed on the particle surface, and the first surface may be planar. The surface of the positive electrode active material particle may have a structure in which a plurality of planes are connected. When manufacturing the positive electrode active material particle, crystallites having a planar first surface are easily obtained by growing crystallites on the surface of the particle until one crystallite and another crystallite are connected to each other.

### 1.2 Chemical composition of positive electrode active material particle

The positive electrode active material particle according to one embodiment has a chemical composition represented by LiₐNa_{b}Mnₓ₋ₚNi_{y-q}Co_{z-r}M_{p+q+r}O₂, where 1.00 < a < 1.30, 0 ≤ b ≤ 0.20, x + y + z = 1, and 0 ≤ p + q + r ≤ 0. 15. M is at least one element selected from B, Mg, Al, K, Ca, Ti, V, Cr, Fe, Cu, Zn, Ga, Ge, Sr, Y, Zr, Nb, Mo, and W. Conventionally, in positive electrode active material particles having an O2-type structure, the compositional ratio of Li was only 1.00 or less (the above a is 1.00 or less), and there was room for improvement in terms of capacity. In contrast, in the positive electrode active material particle of the present disclosure, the compositional ratio of Li is greater than 1.00 (the above a is greater than 1.00) while having an O2-type structure, and the particle has excellent capacity (as described above, both conventional positive electrode active material particles and the positive electrode active material particle of the present disclosure may comprise other crystal structures in addition to an O2-type structure). Such a positive electrode active material particle comprising Li in excess can be manufactured by a novel method according to the present inventors. The manufacturing method for the positive electrode active material particle will be described below.

In the above chemical composition, a is greater than 1.00 and may be 1.02 or greater, 1.04 or greater, 1.06 or greater, 1.08 or greater, 1.10 or greater, 1.12 or greater, 1.14 or greater, or 1.16 or greater, and is 1.30 or less and may be 1.28 or less, 1.26 or less, 1.24 or less, 1.22 or less, or 1.20 or less. In the above chemical composition, b may be 0 or greater, 0.01 or greater, 0.02 or greater, or 0.03 or greater, and may be 0.20 or less, 0.15 or less, or 0.10 or less. In the above chemical composition, x may be 0 or greater, 0.10 or greater, 0.20 or greater, 0.30 or greater, 0.40 or greater, or 0.50 or greater, and may be 1.00 or less, 0.90 or less, 0.80 or less, 0.70 or less, or 0.60 or less. In the above chemical composition, y may be 0 or greater, 0.10 or greater, or 0.15 or greater, and may be 1.00 or less, 0.90 or less, 0.80 or less, 0.70 or less, 0.60 or less, 0.50 or less, 0.40 or less, 0.30 or less, or 0.20 or less. In the above chemical composition, z may be 0 or greater, 0.10 or greater, 0.20 or greater, or 0.25 or greater, and may be 1.00 or less, 0.90 or less, 0.80 or less, 0.70 or less, 0.60 or less, 0.50 or less, 0.40 or less, or 0.35 or less. Many types of M make a small contribution towards charging-discharging. In this regard, by having p + q + r at 0.15 or less, a high charging-discharging capacity is easily ensured. p + q + r may be 0.10 or less, may be 0.05 or less, or may be 0. The composition of O is approximately 2, but is variable without being limited to exactly 2.0.

### 1.3 Shape of positive electrode active material particle

The positive electrode active material particle according to one embodiment is spherical. When a spherical positive electrode active material particle is contained in the electrode positive active material layer of a lithium-ion battery, there are merits of the growth of crystallites being easily suppressed and the crystallites being easily small, compared to when a non-spherical positive electrode active material particle (for example, a plate-like particle) is contained. Specifically, when the positive electrode active material particle is spherical, reaction resistance is easily lowered and diffusion resistance inside the active material is easily lowered because of the decrease in crystallite size. Further, it is considered that the degree of curvature is decreased by the spheroidization, and lithium-ion conduction resistance in layers constituting the positive electrode active material layer is lowered. As a result, a spherical positive electrode active material particle is likely to have excellent rate characteristics, compared to a non-spherical positive electrode active material particle. Such a spherical positive electrode active material particle can be manufactured by a novel method according to the present inventors. The manufacturing method for the positive electrode active material particle will be described below. Note that, "spherical" means having a circularity of 0.80 or greater. The circularity of the positive electrode active material particle may be 0.81 or greater, 0.82 or greater, 0.83 or greater, 0.84 or greater, 0.85 or greater, 0.86 or greater, 0.87 or greater, 0.88 or greater, 0.89 or greater, or 0.90 or greater. The circularity of the positive electrode active material particle is defined as 4πS/L², where S is the orthographic area of a particle and L is the circumference of an orthographic image of the particle. The circularity of the positive electrode active material particle can be determined by observing the exterior of the particle or the cross-sectional shape described above with a scanning electron microscope (SEM), a transmission electron microscope (TEM), or an optical microscope.

The positive electrode active material particle according to one embodiment may be a solid particle, may be a hollow particle, or may be a particle having a void. When the positive electrode active material particle is a hollow particle or a particle having a void, it is considered possible to fill a hollow portion or a void portion with a liquid. For example, an electrolytic solution spreads not only on the outer surface of the positive electrode active material particle but also to the inside thereof, and contact area between the particle and the electrolytic solution is easily increased.

### 1.4 Size of positive electrode active material particle

The size of the positive electrode active material particle according to one embodiment is not particularly limited. For example, a diameter D of the positive electrode active material particle according to one embodiment may be 0.1 µm or more and 10 µm or less, 0.5 µm or more and 8.0 µm or less, or 1.0 µm or more and 6.0 µm or less. Note that, the diameter D of the positive electrode active material particle is an equivalent circle diameter when the exterior or cross-sectional shape of the positive electrode active material particle is observed with SEM. When a plurality of positive electrode active material particles are present, the diameter D of the positive electrode active material particles is a number average value of equivalent circle diameters of the plurality of positive electrode active material particles.

### 2. Manufacturing method for positive electrode active material particle

A positive electrode active material particle comprising Li in excess can be manufactured, for example, by the following method. As shown in FIG. 2, a manufacturing method for the positive electrode active material particle according to one embodiment comprises obtaining a Na-containing transition metal oxide particle having a P2-type structure (step S1), and bringing an ion exchange material into contact with the Na-containing transition metal oxide particle, whereby at least a portion of Na in the Na-containing transition metal oxide particle is substituted with Li, to obtain a Li-containing transition metal oxide particle having an O2-type structure (step S2), wherein the ion exchange material comprises lithium hydroxide and a lithium salt.

### 2.1 Step S1

In step S1, a Na-containing transition metal oxide particle having a P2-type structure is obtained. The shape of the Na-containing transition metal oxide particle having a P2-type structure determines the shape of the Li-containing transition metal oxide particle having an O2-type structure. In the manufacturing method according to one embodiment, the Na-containing transition metal oxide particle is spherical, and the Li-containing transition metal oxide particle is spherical. In other words, when manufacturing a spherical Li-containing transition metal oxide particle having an O2-type structure, obtaining a spherical Na-containing transition metal oxide particle having a P2-type structure is preferable in the step S1.

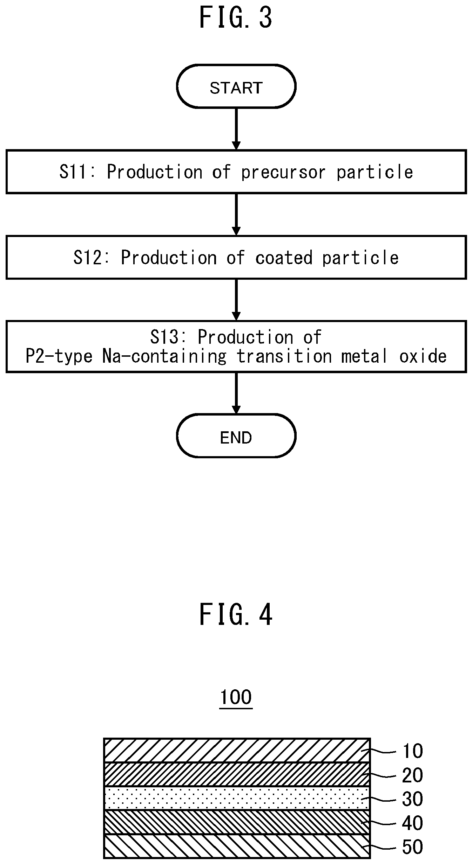

The Na-containing transition metal oxide particle having a P2-type structure can be manufactured, for example, by the method shown in FIG. 3. Specifically, the manufacturing method according to one embodiment comprises obtaining a precursor particle (step S11), coating a surface of the precursor particle with a Na salt to obtain a coated particle (step S12), and firing the coated particle to obtain a Na-containing transition metal oxide particle having a P2-type structure (step S13).

### 2.1.1 Step S11

In step S11, a precursor particle is obtained. The precursor particle may be a salt comprising at least one transition metal element among Mn, Ni, and Co. The precursor particle, for example, may be at least one of a carbonate, a sulfate, a nitrate, an acetate, and a hydroxide. Specifically, the precursor particle may be a salt represented by MeCO₃ (Me is at least one transition metal element among Mn, Ni, and Co), may be a salt represented by MeSO₄, may be a salt represented by Me(NO₃)₂, may be a salt represented by Me(CH₃COO)₂, or may be a compound represented by Me(OH)₂. These may be hydrates. In addition, the precursor particle may comprise at least one element selected from B, Mg, A, K, Ca, Ti, V, Cr, Fe, Cu, Zn, Ga, Ge, Sr, Y, Zr, Nb, Mo, and W, in addition to the transition metal element Me.

The precursor particle may be spherical. The definition of "spherical" is as stated above. By having a spherical precursor particle, the shapes of the Na-containing transition metal oxide particle and Li-containing transition metal oxide particle (positive electrode active material particle) can be spherical. The size of the spherical precursor particle is not particularly limited. The spherical precursor particle can be obtained, for example, by a solution method such as a coprecipitation method or a sol-gel method. Specifically, in the case of a coprecipitation method, an aqueous solution of MeSO₄ and an aqueous solution of Na₂CO₃ are prepared, the aqueous solutions are added dropwise and mixed, whereby a precipitate is obtained. The precipitate is a spherical precursor particle represented by MeCO₃. A carbonate comprising Me and M may be obtained as a precursor particle by dissolving a sulfate of M in an aqueous solution of MeSO₄.

### 2.1.2 Step S12

In step S12, a surface of the above precursor particle is coated with a Na salt to obtain a coated particle. The manufacturing method according to one embodiment may comprise coating 40% by area or greater of a surface of the above precursor particle with a Na salt to obtain a coated particle. The precursor particle may be spherical. By having a spherical precursor particle and a coverage of the Na salt on the precursor particle at 40% by area or greater, a spherical P2-type particle and a spherical O2-type particle are easily obtained. The coated particle may be obtained by coating 50% by area or greater, 60% by area or greater, or 70% by area of the surface of the above precursor particle with a Na salt. Examples of the Na salt include carbonates and nitrates.

The method of coating the surface of the precursor particle with a Na salt includes various methods. When finally obtaining a spherical O2-type positive electrode active material particle, for example, a rolling fluidized coating method or a spray drying method is preferably adopted. Specifically, a coating solution in which a Na salt is dissolved is prepared, the coating solution is brought into contact with the entire surface of the precursor particle, and simultaneously or subsequently dried. By adjusting the conditions (such as temperature, time, and number of times) of coating, for example, 40% by area or greater of the surface of the precursor particle can be coated with a Na salt. According to the findings of the present inventors, when the coverage of the Na salt is small, P2-type crystals tend to grow abnormally on the surface of the coated particle when the coated particle is fired, and a plate-like Na-containing transition metal oxide particle is obtained while a spherical Na-containing transition metal oxide particle is difficult to obtain. When the coverage of the Na salt is large, crystallites of P2-type crystals can be small when the coated particle is fired, and the shape of the coated particle is likely spherical, corresponding to the shape of the precursor particle. The coating amount of the Na salt on the coated particle may be of any amount as long as the amount (an amount such that a sufficient amount of Na is doped) is sufficient for obtaining a P2-type structure.

### 2.1.3 Step S13

In step S13, the above coated particle is fired to obtain a Na-containing transition metal oxide particle having a P2-type structure. The Na-containing transition metal oxide particle may be plate-like or may be spherical. However, as stated above, when the particle is spherical, more excellent performance is easily demonstrated. When the Na-containing transition metal oxide particle is plate-like, the subsequently obtained O2-type positive electrode active material is also plate-like. On the other hand, when the Na-containing transition metal oxide particle is spherical, the subsequently obtained O2-type positive electrode active material is also spherical.

The firing temperature in the step S13 may be any temperature as long as a P2-type structure is generated. When the firing temperature is too low, Na doping is not carried out and a P2-type structure is difficult to obtain. On the other hand, when the firing temperature is too high, an O3-type structure, not a P2-type structure, is easily generated. The firing temperature, for example, may be 700 °C or higher and 1100 °C or lower, or may be 800 °C or higher and 1000 °C or lower.

The firing time in the step S13 needs only to be appropriately adjusted in accordance with the shape of the intended Na-containing transition metal oxide particle. As stated above, when the coverage of the Na salt on the coated particle is small, P2-type crystals tend to grow abnormally on the surface of the coated particle when the coated particle is fired, and a plate-like Na-containing transition metal oxide particle is easily obtained. On the other hand, when the coverage of the Na salt on the coated particle is large, small P2-type crystal crystallites are easily formed on the surface of the coated particle when the particle is fired, and a spherical Na-containing transition metal oxide particle can be obtained by growing P2-type crystals along the surface of the particle so that one P2-type crystallite and another P2-type crystallite are connected to each other. When the firing time is too short, Na doping is not carried out and the intended P2-type structure is not obtained. When the firing time is too long, the P2-type structure grows excessively and a plate-like particle is formed. As far as the present inventors have confirmed, when the firing time is 30 min or more and 3 h or less, a spherical Na-containing transition metal oxide particle is easily obtained, and when this firing time is exceeded, a plate-like Na-containing transition metal oxide particle is easily obtained.

The firing atmosphere in the step S13 is not particularly limited, and for example, may be an oxygen-containing atmosphere such as an ambient air atmosphere or an inert gas atmosphere.

The Na-containing transition metal oxide particle obtained via the above steps S11 to S13 may at least comprise at least one transition metal element among Mn, Ni, and Co; Na; and O as constituent elements. Particularly, when the constituent elements at least include Na, Mn, at least one of Ni and Co, and O, especially when the constituent elements include at least Na, Mn, Ni, Co, and O, performance of the positive electrode active material particle tends to be higher. The Na-containing transition metal oxide particle may have a chemical composition represented by Na_{c}Mnₓ₋ₚNi_{y-q}Co_{z-r}M_{p+q+r}O₂, where 0 < c < 0.70, x + y + z = 1, and 0 ≤ p + q + r ≤ 0.15. In addition, M is at least one element selected from B, Mg, Al, K, Ca, Ti, V, Cr, Fe, Cu, Zn, Ga, Ge, Sr, Y, Zr, Nb, Mo, and W. When the Na-containing transition metal oxide particle has such a chemical composition, a P2-type structure is more easily maintained. In the above chemical composition, c may be greater than 0, 0.10 or greater, 0.20 or greater, 0.30 or greater, 0.40 or greater, 0.50 or greater, or 0.60 or greater. In the above chemical composition, x is 0 or greater, 0.10 or greater, 0.20 or greater, 0.30 or greater, 0.40 or greater, or 0.50 or greater, and may be 1.00 or less, 0.90 or less, 0.80 or less, 0.70 or less, or 0.60 or less. In the above chemical composition, y may be 0 or greater, 0.10 or greater, or 0.15 or greater, and may be 1.00 or less, 0.90 or less, 0.80 or less, 0.70 or less, 0.60 or less, 0.50 or less, 0.40 or less, 0.30 or less, or 0.20 or less. In the above chemical composition, z may be 0 or greater, 0.10 or greater, 0.20 or greater, or 0.25 or greater, and may be 1.00 or less, 0.90 or less, 0.80 or less, 0.70 or less, 0.60 or less, 0.50 or less, 0.40 or less, or 0.35 or less. Many types of M make a small contribution towards charging-discharging. In this regard, by having p + q + r at 0.15 or less, a high charging-discharging capacity is easily ensured. p + q + r may be 0.10 or less, may be 0.05 or less, or may be 0. The composition of O is approximately 2, but is variable without being limited to exactly 2.0.

### 2.2 Step S2

In step S2, an ion exchange material is brought into contact with the above Na-containing transition metal oxide particle, whereby at least a portion of Na in the Na-containing transition metal oxide particle is substituted with Li, to obtain a Li-containing transition metal oxide particle having an O2-type structure, wherein the ion exchange material comprises lithium hydroxide and a lithium salt.

The ion exchange includes, for example, a method using an aqueous solution comprising a lithium salt and a method using a molten lithium salt. From the viewpoint of the P2-type structure breaking easily due to intrusion of water and the viewpoint of crystallinity, of the above two methods, the method using a molten lithium salt is preferable. Specifically, the above Na-containing transition metal oxide particle having a P2-type structure and the lithium salt are mixed, then heated to a temperature at the melting point of the lithium salt or higher. The molten lithium salt is brought into contact with the Na-containing transition metal oxide particle, whereby at least a portion of Na in the Na-containing transition metal oxide particle can be substituted with Li by ion exchange.

In the step S2, it is important that lithium hydroxide be used in combination with the lithium salt as an ion exchange material. By using a material having a high Li concentration as a Li source during ion exchange, an ion exchange reaction can be promoted, and the compositional ratio of Li in the Li-containing transition metal oxide particle having an O2-type structure is greater than 1.0 (the above a is greater than 1.0). Such an effect is easily obtained by using lithium hydroxide in combination with a lithium salt.

In the step S2, the type of lithium salt constituting the ion exchange material is not particularly limited. In one embodiment, the lithium salt constituting the ion exchange material may comprise at least one lithium halide among lithium chloride, lithium bromide, and lithium iodide. Particularly, when lithium chloride is used, more excellent performance is easily ensured. In one embodiment, the lithium salt constituting the ion exchange material may comprise lithium nitrate. In one embodiment, the lithium salt constituting the ion exchange material may be a mixed salt of a lithium halide described above and lithium nitrate. Lithium halides and lithium nitrate have low melting points, and ion exchange at a lower temperature is possible.

In the step S2, the ratios of lithium hydroxide and the lithium salt contained in the ion exchange material are not particularly limited. In the ion exchange material according to one embodiment, the ratio of lithium hydroxide out of the total (100 mol%) of lithium hydroxide and lithium salt may be 10 mol% or greater and 90 mol% or less, 20 mol% or greater and 80 mol% or less, 40 mol% or greater and 75 mol% or less, 50 mol% or greater and 70 mol% or less, or 55 mol% or greater and 65 mol% or less. As a result, the melting point of the ion exchange material is lowered, and the ion exchange material is more suitable as an ion exchange material. In the ion exchange material according to one embodiment, the molar ratio of lithium hydroxide may be greater than the molar ratio of the lithium salt. In the step S2, the ion exchange material may consist only of lithium hydroxide and a lithium salt, or may comprise some optional component in addition to lithium hydroxide and a lithium salt.

In the step S2, the ion exchange temperature, for example, may be the melting point of the above ion exchange material or higher, and may be 600 °C or lower, 500 °C or lower, 400 °C or lower, or 300 °C or lower. When the ion exchange temperature is too high, an O3-type structure, which is a stable phase, not an O2-type structure, is easily generated. From the viewpoint of shortening the time for the ion exchange, it is preferable that the temperature during ion exchange be as high as possible. The ion exchange time is not particularly limited, and for example, may be 10 min or more and 10 h or less, 30 min or more and 7 h or less, or 1 h or more and 5 h or less. As far as the present inventors have confirmed, a positive electrode active material particle having an O2-type crystal structure is more easily manufactured properly at an ion exchange temperature of 270 °C or higher and 320 °C or lower for an ion exchange time of 1 h or more and 8 h or less.

### 3. Lithium-ion battery

The positive electrode active material particle of the present disclosure can be adopted as a positive electrode active material of a lithium-ion battery. FIG. 4 schematically shows a configuration of a lithium-ion battery 100 according to one embodiment. As shown in FIG. 4, the lithium-ion battery 100 comprises a positive electrode active material layer 20, an electrolyte layer 30, and a negative electrode active material layer 40. The positive electrode active material layer 20 comprises the positive electrode active material particle of the present disclosure. The lithium-ion battery 100 may comprise a solid electrolyte in at least one of the positive electrode active material layer 20, the electrolyte layer 30, and the negative electrode active material layer 40. Further, the lithium-ion battery 100 may be a solid battery. A solid battery refers to a battery in which an electrolyte having carrier-ion conducting properties is mainly composed of a solid electrolyte. However, a portion thereof may include a liquid component. Alternatively, the lithium-ion battery 100 may be an all-solid battery that is substantially free of a liquid component. Alternatively, the lithium-ion battery 100 may be a liquid-based battery comprising an electrolytic solution. As shown in FIG. 4, the lithium-ion battery 100 may be provided with a positive electrode current collector 10 in contact with the positive electrode active material layer 20. In addition, the lithium-ion battery 100 may be provided with a negative electrode current collector 50 in contact with a negative electrode active material layer 40.

### 3.1 Positive electrode current collector

Any general positive electrode current collector for lithium-ion batteries can be adopted as the positive electrode current collector 10. The positive electrode current collector 10 may have at least one shape selected from foil-like, plate-like, mesh-like, punched metal-like, and a foam. The positive electrode current collector 10 may be composed of a metal foil or a metal mesh. Particularly, a metal foil has excellent handleability. The positive electrode current collector 10 may consist of a plurality of foils. Examples of metals constituting the positive electrode current collector 10 include at least one selected from Cu, Ni, Cr, Au, Pt, Ag, Al, Fe, Ti, Zn, Co, V, Mg, Pg, Ge, In, Sn, Zr, and stainless steel. Particularly, from the viewpoint of ensuring oxidation resistance, the positive electrode current collector 10 may comprise Al. The positive electrode current collector 10 may have on the surface thereof some coating layer for the purpose of adjusting resistance. For example, the positive electrode current collector 10 may have a carbon coating layer. The positive electrode current collector 10 may be a metal foil or substrate plated or vapor-deposited with a metal described above. When the positive electrode current collector 10 consists of a plurality of metal foils, there may be some layer between the plurality of metal foils. The thickness of the positive electrode current collector 10 is not particularly limited, and for example, may be 0.1 µm or more and 1 mm or less. The lower limit may be 1 µm or more, and the upper limit may be 100 µm or less.

### 3.2 Positive electrode active material layer

The positive electrode active material layer 20 comprises at least the above positive electrode active material particle as a positive electrode active material. In addition, the positive electrode active material layer 20 may comprise an electrolyte. The electrolyte may be a solid electrolyte, may be a liquid electrolyte, or may be a combination of a solid electrolyte and a liquid electrolyte. The positive electrode active material layer 20 may comprise one of a conductive aid and a binder or both. The positive electrode active material layer 20 may comprise an electrolyte and one of a conductive aid and a binder or both. The positive electrode active material layer 20 may comprise an electrolyte, a conductive aid, and a binder. Further, the positive electrode active material layer 20 may comprise various additives. The content of each of the positive electrode active material, the electrolyte, the conductive aid, and the binder in the positive electrode active material layer 20 need only to be appropriately determined in accordance with the target performance. For example, when the entire positive electrode active material layer 20 (entire solid content) is 100% by mass, the content of the positive electrode active material (the total of the positive electrode active material particle of the present disclosure and additional positive electrode active material) may be 40% by mass or greater, 50% by mass or greater, or 60% by mass or greater, and may be 100% by mass or less or 90% by mass or less. The shape of the positive electrode active material layer 20 is not particularly limited, and for example, may be a sheet-like positive electrode active material layer 20 having a substantially flat surface. The thickness of the positive electrode active material layer 20 is not particularly limited, and for example, may be 0.1 µm or more or 1 µm or more, and may be 2 mm or less or 1 mm or less.

### 3.2.1 Positive electrode active material

The positive electrode active material layer 20 may contain only the above positive electrode active material particle of the present disclosure as a positive electrode active material. Alternatively, the positive electrode active material layer 20 may contain a different type of positive electrode active material (additional positive electrode active material), in addition to the positive electrode active material particle of the present disclosure. From the viewpoint of further enhancing the effect according to the technique of the present disclosure, the content ratio of the additional positive electrode active material in the positive electrode active material layer 20 may be small. For example, when the entirety of the positive electrode active material contained in the positive electrode active material layer 20 is 100% by mass, the content ratio of positive electrode active material from the above positive electrode active material particle of the present disclosure may be 50% by mass or greater and 100% by mass or less, 60% by mass or greater and 100% by mass or less, 70% by mass or greater and 100% by mass or less, 80% by mass or greater and 100% by mass or less, 90% by mass or greater and 100% by mass or less, 95% by mass or greater and 100% by mass or less, or 99% by mass or greater and 100% by mass or less.

Any known positive electrode active material for lithium-ion batteries can be adopted as an additional positive electrode active material. Of known active materials, materials having a relatively high electric potential (charge-discharge potential) for storing and releasing lithium ions can be used as positive electrode active materials, and materials having a relatively low electric potential therefor can be used as negative electrode active materials. The additional positive electrode active material, for example, may be at least one selected from various lithium-containing compounds, elemental sulfur, and sulfur compounds. The lithium-containing compound as a positive electrode active material may be a lithium-containing oxide comprising at least one element M; Li; and O. The element M, for example, may be at least one selected from Mn, Ni, Co, Al, Mg, Ca, Sc, V, Cr, Cu, Zn, Ga, Ge, Y, Zr, Sn, Sb, W, Pb, Bi, Fe, and Ti, or may be at least one selected from the group consisting of Mn, Ni, Co, Al, Fe, and Ti. More specifically, the lithium-containing oxide may be at least one selected from lithium cobaltate, lithium nickelate, lithium manganate, lithium nickel cobaltate, lithium nickel manganate, lithium cobalt manganate, lithium nickel-cobalt-manganese oxide (Li_{1±α}NiₓCo_{y}Mn_{z}O_{2±δ} (for example, 0 < x < 1, 0 < y < 1, 0 < z < 1, and x + y + z = 1)), spinel-based lithium compounds (heteroelement-substituted Li-Mn spinels having a composition represented by Li₁₊ₓMn_{2-x-y}M_{y}O₄ (M is one or more selected from Al, Mg, Co, Fe, Ni, and Zn)), lithium nickel-cobalt-aluminum oxide (for example, Li_{1±α}NiₚCo_{q}AlᵣO_{2±δ} (for example, p + q + r = 1)), lithium titanate, and lithium metal phosphate (such as LiMPO₄; M is one or more selected from Fe, Mn, Co, and Ni). The additional positive electrode active material may comprise a lithium-containing oxide at least comprising at least one of Ni, Co, and Mn; Li; and O as constituent elements. Alternatively, the additional positive electrode active material may comprise a lithium-containing oxide at least comprising at least one of Ni, Co, and Al; Li; and O as constituent elements. The additional positive electrode active material may be of one type used alone, or may be of two or more types used in combination.

The shape of the additional positive electrode active material needs only to be any general shapes of positive electrode active materials of lithium-ion batteries. The additional positive electrode active material, for example, may be particulate. The additional positive electrode active material may have voids therein, for example, may be porous or hollow. The additional positive electrode active material may be of primary particles, or may be of secondary particles of a plurality of agglomerated primary particles. The average particle size D50 of the additional positive electrode active material, for example, may be 1 nm or more and 500 µm or less, the lower limit may be 5 nm or more or 10 nm or more, and the upper limit may be 100 µm or less, 50 µm or less, or 30 µm or less. Note that the average particle size D50 is the 50% cumulative particle size (median diameter) in a volume-based particle size distribution determined by a laser diffraction/scattering method.

### 3.2.2 Protective layer

A protective layer having ion-conducting properties may be formed on the surface of the positive electrode active material (the above positive electrode active material particle of the present disclosure, an additional positive electrode active material). Specifically, the positive electrode active material layer 20 may comprise a composite of a positive electrode active material and a protective layer, and at least a portion of the surface of the positive electrode active material of the composite may be covered by the protective layer. As a result, for example, a reaction between the positive electrode active material and another battery material (such as a sulfide solid electrolyte described below) is easily suppressed. The protective layer having ion-conducting properties can comprise various ion-conducting compounds. The ion-conducting compound, for example, may be at least one selected from an ion-conducting oxide and an ion-conducting halide.

The ion-conducting oxide, for example, may comprise at least one element selected from B, C, Al, Si, P, S, Ti, La, Zr, Nb, Mo, Zn, and W; Li; and O. The ion-conducting oxide may be an oxynitride comprising N. More specifically, the ion-conducting oxide may be at least one selected from Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, Li₂WO₄, LiPON, Li₂O-LaO₂, and Li₂O-ZnO₂. The ion-conducting oxide may have a portion of elements substituted by various doping elements.

The ion-conducting halide, for example, may be at least one of various compounds exemplified as a halide solid electrolyte described below. The halide having ion-conducting properties, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm; at least one halogen element selected from the group consisting of Cl, Br, I, and F; and Li. The halide having ion-conducting properties may comprise at least one selected from the group consisting of Ti, Al, Gd, Ca, Zr, and Y; at least one selected from the group consisting of Cl, Br, I, and F; and Li. The halide having ion-conducting properties may comprise at least one element selected from the group consisting of Ti and Al; at least one element selected from the group consisting of Cl, Br, I, and F; and Li. The halide having ion-conducting properties, for example, may be a complex halide of Li, Ti, Al, and F.

The coverage (area ratio) of the protective layer relative to the surface of the positive electrode active material, for example, may be 70% or greater, may be 80% or greater, or may be 90% or greater. The thickness of the protective layer, for example, may be 0.1 nm or more and 100 nm or less. The lower limit may be 1 nm or more, and the upper limit may be 20 nm or less.

### 3.2.3 Electrolyte

The positive electrode active material layer 20 can comprise an electrolyte. The electrolyte that can be contained in the positive electrode active material layer 20 may be a solid electrolyte, may be a liquid electrolyte, or may be a combination of a solid electrolyte and a liquid electrolyte.

### 3.2.3.1 Solid electrolyte

The solid electrolyte needs only to be any known solid electrolyte for lithium-ion batteries. The solid electrolyte may be an inorganic solid electrolyte or an organic polymer electrolyte. Particularly, an inorganic solid electrolyte has excellent ion-conducting properties and heat resistance. Examples of the inorganic solid electrolyte include oxide solid electrolytes, sulfide solid electrolytes, and inorganic solid electrolytes having ion-binding properties. Among the inorganic solid electrolytes, the performance of sulfide solid electrolytes, particularly sulfide solid electrolytes comprising at least Li, S, and P as constituent elements, is high. Alternatively, among the inorganic solid electrolytes, the performance of solid electrolytes having ion-binding properties, particularly solid electrolytes comprising at least Li, Y, and a halogen (at least one of Cl, Br, I, and F) as constituent elements, is high. The solid electrolyte may be amorphous, or may be crystalline. The solid electrolyte may be particulate. The average particle size (D50) of the solid electrolyte, for example, may be 10 nm or more and 10 µm or less. Note that, the average particle size D50 referred to herein is the 50% cumulative particle size (median diameter) in a volume-based particle size distribution determined by a laser diffraction/scattering method. The ion conductivity of the solid electrolyte at 25 °C, for example, may be 1 × 10⁻⁵ S/cm or more, 1 × 10⁻⁴ S/cm or more, or 1 × 10⁻³ S/cm or more. The solid electrolyte may be of one type used alone, or may be of two or more types used in combination.

The oxide solid electrolyte may be one or more selected from lithium lanthanum zirconate, LiPON, Li₁₊ₓAlₓGe₂₋ₓ(PO₄)₃, Li-SiO-based glass, and Li-Al-S-O-based glass. When an oxide solid electrolyte and a liquid electrolyte are combined, ion-conducting properties can be improved.

The sulfide solid electrolyte may be a glass-based sulfide solid electrolyte (sulfide glass), may be a glass-ceramic-based sulfide solid electrolyte, or may be a crystal-based sulfide solid electrolyte. The sulfide glass is amorphous. The sulfide glass may have a glass transition temperature (Tg). When the sulfide solid electrolyte has a crystal phase, examples of the crystal phase include Thio-LISICON-type crystal phase, LGPS-type crystal phase, and argyrodite-type crystal phase.

The sulfide solid electrolyte, for example, may contain Li element, an X element (X is at least one of P, As, Sb, Si, Ge, Sn, B, Al, Ga, and In), and S element. In addition, the sulfide solid electrolyte may further contain at least one of O element and a halogen element. Further, the sulfide solid electrolyte may contain S element as an anionic element main component.

The sulfide solid electrolyte, for example, may be at least one selected from Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any of Ge, Zn, and Ga), Li₂S-GeS₂, Li₂S-SiS₂-Li₃PO₄, and Li₂S-SiS₂-LiₓMO_{y} (where x and y are positive numbers, and M is any of P, Si, Ge, B, Al, Ga, and In).

The composition of the sulfide solid electrolyte is not particularly limited. Examples thereof include xLi₂S·(100 - x)P₂S₅ (70 ≤ x ≤ 80) and yLiI·zLiBr·(100 - y - z)(xLi₂S·(1 - x)P₂S₅) (0.7 ≤ x ≤ 0.8, 0 ≤ y ≤ 30, and 0 ≤ z ≤ 30). Alternatively, the sulfide solid electrolyte may have a composition represented by general formula: Li₄₋ₓGe₁₋ₓPₓS₄ (0 < x < 1). In the general formula, at least a portion of Ge may be substituted with at least one of Sb, Si, Sn, B, Al, Ga, In, Ti, Zr, V, and Nb. In the above general formula, at least a portion of P may be substituted with at least one of Sb, Si, Sn, B, Al, Ga, In, Ti, Zr, V, and Nb. In the above general formula, a portion of Li may be substituted with at least one of Na, K, Mg, Ca, and Zn. In the above general formula, a portion of S may be substituted with a halogen (at least one of F, Cl, Br, and I). Alternatively, the sulfide solid electrolyte may have a composition represented by Li₇₋ₐPS₆₋ₐXₐ (X is at least one of Cl, Br, and I, and a is a number of 0 or greater and 2 or less), a may be 0 or may be greater than 0. In the latter case, a may be 0.1 or greater, may be 0.5 or greater, or may be 1 or greater, a may be 1.8 or less, or may be 1.5 or less.

The solid electrolyte having ion-binding properties, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm. These elements can generate cations in water. The ion-binding solid electrolyte material, for example, may comprise at least one halogen element selected from the group consisting of Cl, Br, I, and F. These elements can generate anions in water. The solid electrolyte having ion-binding properties may comprise at least one selected from the group consisting of Gd, Ca, Zr, and Y, at least one selected from the group consisting of Cl, Br, I, and F, and Li. The solid electrolyte having ion-binding properties comprises Li and Y, and may comprise at least one selected from the group consisting of Cl, Br, I, and F. More specifically, the solid electrolyte having ion-binding properties may comprise Li, Y, Cl, and Br, may comprise Li, Ca, Y, Gd, Cl, and Br, or may comprise Li, Zr, Y, and Cl. Even more specifically, the solid electrolyte having ion-binding properties may be at least one of Li₃YBr₂Cl₄, Li_{2.8}Ca_{0.1}Y_{0.5}Gd_{0.5}Br₂Cl₄, and Li_{2.5}Y_{0.5}Zr_{0.5}Cl₆.

The solid electrolyte having ion-binding properties may be a halide solid electrolyte. A halide solid electrolyte has excellent ion-conducting properties. The halide solid electrolyte may have a composition represented by, for example, formula (A):

Li_{α}M_{β}X_{γ} ... (A)

where α, β, and γ are each independently a value greater than 0, M is at least one selected from the group consisting of metal elements other than Li and semimetal elements, and X is at least one selected from the group consisting of Cl, Br, and I. Note that a "semimetal element" may be at least one selected from the group consisting of B, Si, Ge, As, Sb, and Te. Further, a "metal element" may include (i) all of the elements contained from Group 1 to Group 12 of the periodic table (excluding hydrogen) and (ii) all of the elements contained from Group 13 to Group 16 of the periodic table (excluding B, Si, Ge, As, Sb, Te, C, N, P, O, S, and Se). A metal element can form an inorganic compound with halide ions and form cations.

In the formula (A), M may comprise Y (i.e., yttrium). A halide solid electrolyte comprising Y may have a composition represented by LiₐMe_{b}Y_{c}X₆ (where a + mb + 3c = 6, c > 0, Me is at least one selected from the group consisting of metal elements and semimetal elements other than Li and Y, and m is the valence of Me). Me, for example, may be at least one selected from the group consisting of Mg, Ca, Sr, Ba, Zn, Sc, Al, Ga, Bi, Zr, Hf, Ti, Sn, Ta, and Nb.

The halide solid electrolyte may have a composition represented by formula (A1): Li_{6-3d}Y_{d}X₆. In the formula (A1), X is one or more elements selected from the group consisting of Cl, Br, and I. d may satisfy 0 < d < 2, or may be d = 1. The halide solid electrolyte may have a composition represented by formula (A2): Li_{3-3δ}Y_{1+δ}Cl₆. In the formula (A2), δ may be 0 < δ ≤ 0.15. The halide solid electrolyte may have a composition represented by formula (A3): Li_{3-3δ}Y_{1+δ}Br₆. In the formula (A3), δ may be 0 < δ ≤ 0.25. The halide solid electrolyte may have a composition represented by formula (A4): Li_{3-3δ+a}Y_{1+δ-a}MeₐCl_{6-x-y}BrₓI_{y}. In the formula (A4), Me may be at least one selected from the group consisting of Mg, Ca, Sr, Ba, and Zn. In the formula (A4), for example, -1 < δ < 2, 0 < a < 3, 0 < (3 - 3δ + a), 0 < (1 + δ - a), 0 ≤ x ≤ 6, 0 ≤ y ≤ 6, and (x + y) ≤ 6 are satisfied. The halide solid electrolyte may have a composition represented by formula (A5): Li_{3-3δ}Y_{1+δ-a}MeₐCl_{6-x-y}BrₓIy. In the formula (A5), Me may be at least one selected from the group consisting of Al, Sc, Ga, and Bi. In the formula (A5), the variables may satisfy -1 < δ < 1, 0 < a < 2, 0 < (1 + δ - a), 0 ≤ x ≤ 6, 0 ≤ y ≤ 6, and (x + y) ≤ 6. The halide solid electrolyte may have a composition represented by formula (A6): Li_{3-3δ-a}Y_{1+δ-a}MeₐCl_{6-x-y}BrₓI_{y}. In the formula (A6), Me may be at least one selected from the group consisting of Zr, Hf, and Ti. In the formula (A6), the variables may satisfy -1 < δ < 1, 0 < a < 1.5, 0 < (3 - 3δ - a), 0 < (1 + δ - a), 0 ≤ x ≤ 6, 0 ≤ y ≤ 6, and (x + y) ≤ 6. The halide solid electrolyte may have a composition represented by formula (A7): Li_{3-3δ-a}Y_{1+δ-a}MeₐCl_{6-x-y}BrₓIy. In the formula (A7), Me may be at least one selected from the group consisting of Ta and Nb. In the formula (A7), the variables may satisfy -1 < δ < 1, 0 < a < 1.2, 0 < (3 - 3δ - 2a), 0 < (1 + δ - a), 0 ≤ x ≤ 6, 0 ≤ y ≤ 6, and (x + y) ≤ 6.

The solid electrolyte having ion-binding properties may be a complex hydride solid electrolyte. The complex hydride solid electrolyte can be composed of Li ions and complex ions comprising H. The complex ion comprising H, for example, may comprise an element M comprising at least one of nonmetal elements, semimetal elements, and metal elements and H bonded to the element M. In the complex ion comprising H, an element M as a central element and H surrounding the element M may be bonded to each other via a covalent bond. The complex ion comprising H may be represented by (MₘHₙ)^{α-}. In this case, m can be any positive number, and n and α can take on any positive number depending on m and the valence of the element M. The element M needs only to be any nonmetal element or metal element that can form a complex ion. For example, the element M may comprise at least one of B, C, and N as a nonmetal element, or may comprise B. Further, for example, the element M may comprise at least one of Al, Ni, and Fe as a metal element. Particularly, when the complex ion comprises B or comprises C and B, higher ion-conducting properties are easily ensured. Specific examples of the complex ion comprising H include (CB₉H₁₀)⁻; (CB₁₁H₁₂)⁻, (B₁₀H₁₀)²⁻, (B₁₂H₁₂)²⁻, (BH₄)⁻, (NH₂)⁻, (AlH₄)⁻, and combinations thereof. Particularly, when (CB₉H₁₀)⁻, (CB₁₁H₁₂)⁻, or a combination thereof is used, higher ion-conducting properties is easily ensured. Specifically, the complex hydride solid electrolyte may comprise Li, C, B, and H.

### 3.2.3.2 Liquid electrolyte

The liquid electrolyte (electrolytic solution) is a liquid comprising lithium ions as carrier ions. The electrolytic solution may be a water-based electrolytic solution or a non-water-based electrolytic solution. The composition of the electrolytic solution needs only to be the same as one known as a composition of an electrolytic solution for lithium-ion batteries. The electrolytic solution may be water or a non-water-based solvent dissolving a lithium salt. Examples of the non-water-based solvent include carbonate-based solvents. The carbonate-based solvent includes fluoroethylene carbonate (FEC), ethylene carbonate (EC), dimethyl carbonate (DMC), and propylene carbonate (PC). Examples of the lithium salt include LiPF₆, LiTFSI, and LiFSI.

### 3.2.4 Conductive aid

Examples of the conductive aid that can be contained in the positive electrode active material layer 20 include carbon materials such as vapor-grown carbon fiber (VGCF), acetylene black (AB), ketjen black (KB), carbon nanotube (CNT), and carbon nanofiber (CNF); and metal materials such as nickel, titanium, aluminum, and stainless steel. The conductive aid, for example, may be particulate or fibrous, and the size thereof is not particularly limited. The conductive aid may be of one type used alone, or may be of two or more types used in combination.

### 3.2.5 Binder

Examples of the binder that can be contained in the positive electrode active material layer 20 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, and polyimide (PI)-based binders. The binder may be of one type used alone, or may be of two or more types used in combination.

### 3.2.6 Others

The positive electrode active material layer 20 may comprise various additives, in addition to the above components, for example, a dispersant or a lubricant.

The positive electrode active material layer 20 can be manufactured by applying a known method. For example, the positive electrode active material layer 20 can be easily formed by dry- or wet-molding a positive electrode mixture comprising the above positive electrode active material particle of the present disclosure. The positive electrode active material layer 20 may be molded with a positive electrode current collector 10, or may be molded separately from the positive electrode current collector 10.

### 3.3 Electrolyte layer

The electrolyte layer 30 is arranged between the positive electrode active material layer 20 and the negative electrode active material layer 40. The electrolyte layer 30 comprises at least an electrolyte. The electrolyte layer 30 may comprise at least one of a solid electrolyte and a liquid electrolyte (electrolytic solution) or both, and may further optionally comprise a binder and various additives. The contents of the electrolyte and the binder in the electrolyte layer 30 are not particularly limited. Alternatively, the electrolyte layer 30 may comprise a separator for retaining an electrolytic solution and preventing contact between the positive electrode active material layer 20 and the negative electrode active material layer 40. The thickness of the electrolyte layer 30 is not particularly limited, and for example, may be 0.1 µm or more and 2 mm or less. The lower limit may be 1 µm or more, and the upper limit may be 1 mm or less.

The electrolyte layer 30 may consist of one layer, or may consist of a plurality of layers. For example, the electrolyte layer 30 may be provided with a first layer arranged on the positive electrode active material layer 20 side and a second layer arranged on the negative electrode active material layer 40 side, wherein the first layer may comprise a first electrolyte and the second layer may comprise a second electrolyte. The first electrolyte and the second electrolyte may be of different types from each other. The first electrolyte and the second electrolyte may each be at least one selected from the above oxide solid electrolytes, sulfide solid electrolytes, and solid electrolytes having ion-binding properties. For example, the first layer may comprise a solid electrolyte having ion-binding properties, and the second layer may comprise at least one of a solid electrolyte having ion-binding properties and a sulfide solid electrolyte.

The electrolyte contained in the electrolyte layer 30 needs only to be appropriately selected from among ones (solid electrolyte and/or liquid electrolyte) exemplified as an electrolyte that can be contained in the positive electrode active material layer 20 described above. The binder that can be contained in the electrolyte layer 30 needs only to be appropriately selected from among ones exemplified as a binder that can be contained in the positive electrode active material layer 20 described above. The electrolyte and the binder may each be of one type used alone, or may be of two or more types used in combination. The separator needs only to be any separator normally used in batteries. Examples thereof include those made of resins such as polyethylene (PE), polypropylene (PP), polyester, and polyamide. The separator may be of a single-layer structure, or may be of a multilayer structure. Examples of separators having a multilayer structure can include separators of a PE/PP two-layer structure and separators of a PP/PE/PP or PE/PP/PE three-layer structure. The separator may consist of a nonwoven fabric such as cellulose nonwoven fabric, resin nonwoven fabric, or glass-fiber nonwoven fabric.

### 3.4 Negative electrode active material layer

The negative electrode active material layer 40 comprises at least a negative electrode active material. The negative electrode active material layer 40 may optionally comprise an electrolyte, a conductive aid, a binder, and various additives. The content of each component in the negative electrode active material layer 40 needs only to be appropriately determined in accordance with the target performance. For example, when the entire solid content of the negative electrode active material layer 40 is 100% by mass, the content of the negative electrode active material may be 40% by mass or greater, 50% by mass or greater, 60% by mass or greater, or 70% by mass or greater, and may be 100% by mass or less, less than 100% by mass, 95% by mass or less, or 90% by mass or less. Alternatively, when the entire negative electrode active material layer 40 is 100% by volume, the negative electrode active material and optionally the electrolyte, conductive aid, and binder in total may be contained at 85% by volume or greater, 90% by volume or greater, or 95% by volume or greater, and the remaining portion may be voids or additional components. The shape of the negative electrode active material layer 40 is not particularly limited, and for example, may be a sheet having a substantially flat surface. The thickness of the negative electrode active material layer 40 is not particularly limited, and for example, may be 0.1 µm or more and 2 mm or less. The lower limit may be 1 µm or more, 10 µm or more, or 30 µm or more, and the upper limit may be 1 mm or less, 500 µm or less, or 100 µm or less.

### 3.4.1 Negative electrode active material

Any known negative electrode active material for lithium-ion batteries can be adopted as the negative electrode active material contained in the negative electrode active material layer 40. Of known active materials, various materials having a low electric potential (charge-discharge potential) for storing and releasing a predetermined carrier ion compared to the above positive electrode active material can be adopted. The negative electrode active material, for example, may be at least one selected from silicon-based active materials such as Si, Si alloys, and silicon oxides; carbon-based active materials such as graphite and hard carbon; various oxide-based active materials such as lithium titanate; and metallic lithium and lithium alloys. The negative electrode active material may be of one type used alone, or may be of two or more types used in combination. The shape of the negative electrode active material needs only to be any general shapes of negative electrode active materials of lithium-ion batteries. For example, the negative electrode active material may be particulate. The negative electrode active material particles may be primary particles, or may be secondary particles of a plurality of agglomerated primary particles. The average particle size (D50) of the negative electrode active material particles, for example, may be 1 nm or more and 500 µm or less. The lower limit may be 5 nm or more or 10 nm or more, and the upper limit may be 100 µm or less, 50 µm or less, or 30 µm or less. Alternatively, the negative electrode active material layer 40 may consist of a sheet-like (foil-like or membranous) active material, such as a lithium foil.

### 3.4.2 Others

The electrolyte that can be contained in the negative electrode active material layer 40 needs only to be appropriately selected from among ones (solid electrolyte and/or liquid electrolyte) exemplified as an electrolyte that can be contained in the positive electrode active material layer 20 described above. The conductive aid that can be contained in the negative electrode active material layer 40, for example, needs only to be appropriately selected from among ones exemplified as a conductive aid that can be contained in the positive electrode active material layer 20 described above. The binder that can be contained in the negative electrode active material layer 40, for example, needs only to be appropriately selected from among one exemplified as a binder that can be contained in the positive electrode active material layer 20 described above. The electrolyte, the conductive aid, and the binder may each be of one type used alone, or may be of two or more types used in combination.

The negative electrode active material layer 40 may comprise various additives, in addition to the above components, for example, a dispersant or a lubricant.

The negative electrode active material layer 40 can be manufactured by applying a known method. For example, the negative electrode active material layer 40 can be easily formed by dry- or wet-molding a negative electrode mixture comprising various components described above. The negative electrode active material layer 40 may be molded with a negative electrode current collector 50, or may be molded separately from the negative electrode current collector 50.

### 3.5 Negative electrode current collector

Any general negative electrode current collector for lithium-ion batteries can be adopted as the negative electrode current collector 50. The negative electrode current collector 50 may be foil-like, plate-like, mesh-like, punched metal-like, or a foam. The negative electrode current collector 50 may be a metal foil or a metal mesh, and alternatively, may be a carbon sheet. Particularly, a metal foil has excellent handleability. The negative electrode current collector 50 may consist of a plurality of foils or sheets. Metals constituting the negative electrode current collector 50 include at least one selected from Cu, Ni, Cr, Au, Pt, Ag, Al, Fe, Ti, Zn, Co, V, Mg, Pb, Ge, In, Sn, Zr, and stainless steel. Particularly, from the viewpoint of ensuring reduction resistance and the viewpoint of making alloying with lithium difficult, the negative electrode current collector 50 may comprise at least one metal selected from Cu, Ni, and stainless steel. The negative electrode current collector 50 may have on the surface thereof some coating layer for the purpose of adjusting resistance. For example, the negative electrode current collector 50 may have a carbon coating layer. The negative electrode current collector 50 may be an aluminum foil having a carbon coating layer. The negative electrode current collector 50 may be a metal foil or a substrate plated or vapor-deposited with a metal described above. When the negative electrode current collector 50 consists of a plurality of metal foils, there may be some layer between the plurality of metal foils. The thickness of the negative electrode current collector 50 is not particularly limited, and for example, may be 0.1 µm or more and 1 mm or less. The lower limit may be 1 µm or more, and the upper limit may be 100 µm or less.

### 3.6 Additional configurations

The lithium-ion battery 100, in addition to the above configuration, may be provided with any general configuration as a battery, for example, tabs or terminals. The lithium-ion battery 100 may be the above configuration housed inside an outer packaging. Any known outer packaging can be adopted as the outer packaging of the battery. In addition, a plurality of lithium-ion batteries 100 may be optionally connected electrically and optionally stacked to form a battery pack. In this case, the battery pack may be housed inside a known battery case. Moreover, the lithium-ion battery 100 may be provided with obvious configurations such as the necessary terminals. Examples of shapes of the lithium-ion battery 100 can include coin-type, laminate-type, cylindrical, and rectangular. The lithium-ion battery 100 may be a secondary battery.

### 4. Manufacturing method for lithium-ion battery

The lithium-ion battery 100 can be manufactured by applying a known method. For example, the lithium-ion battery 100 can be manufactured as follows. However, the manufacturing method for the lithium-ion battery 100 is not limited to the following method. For example, each layer may be formed by dry molding.
(1) A positive electrode active material constituting a positive electrode active material layer is dispersed in a solvent to obtain a positive electrode slurry. The solvent used in this case is not particularly limited, and water and various organic solvents can be used. The positive electrode slurry is then applied on a surface of a positive electrode current collector or an electrolyte layer described below using a doctor blade, followed by drying, whereby a positive electrode active material layer is formed on the surface of the positive electrode current collector or the electrolyte layer to obtain a positive electrode. The positive electrode active material layer may be compression-molded.
(2) A negative electrode active material constituting a negative electrode active material layer is dispersed in a solvent to obtain a negative electrode slurry. The solvent used in this case is not particularly limited, and water and various organic solvents can be used. The negative electrode slurry is then applied on a surface of a negative electrode current collector or an electrolyte layer described below using a doctor blade, followed by drying, whereby a negative electrode active material layer is formed on the surface of the negative electrode current collector or the electrolyte layer to obtain a negative electrode. The negative electrode active material layer may be compression-molded.
(3) Layers are laminated so that an electrolyte layer is interposed between the negative electrode and the positive electrode to obtain a laminated body comprising a negative electrode current collector, a negative electrode active material layer, an electrolyte layer, a positive electrode active material layer, and a positive electrode current collector in this order. The electrolyte layer, for example, may be obtained by molding an electrolyte mixture comprising an electrolyte and a binder, or may be obtained by compression molding. The laminated body may further be compression-molded. Additional members such as terminals are attached to the laminated body as needed. When using an electrolytic solution, a separator may be adopted in the electrolyte layer.
(4) The laminated body is housed in a battery case and sealed, whereby a lithium-ion battery is obtained.

### 5. Method for increasing capacity of lithium-ion battery

The technique of the present disclosure also has an aspect as a method of increasing capacity of a lithium-ion battery. Specifically, the method of increasing capacity of a lithium-ion battery of the present disclosure is characterized by using the above positive electrode active material particle of the present disclosure in the positive electrode active material layer of the lithium-ion battery.

### 6. Vehicle having lithium-ion battery

As described above, when a positive electrode active material layer of a lithium-ion battery is formed using the positive electrode mixture of the present disclosure, an increase in capacity of the lithium-ion battery can be expected. Such a lithium-ion battery, for example, can be suitably used in at least one type of vehicle selected from hybrid vehicle (HEV), plug-in hybrid vehicle (PHEV), and battery electric vehicle (BEV). Specifically, the technique of the present disclosure has an aspect of a vehicle having a lithium-ion battery, wherein the lithium-ion battery comprises a positive electrode active material layer, an electrolyte layer, and a negative electrode active material layer, and the positive electrode active material layer comprises the positive electrode active material particle of the present disclosure.

### EXAMPLES

From the foregoing, one embodiment for each of the positive electrode active material layer, the lithium-ion battery, and the manufacturing methods therefor of the present disclosure has been described. However, it is possible to modify the technique of the present disclosure in various ways other than the above embodiments without departing from the spirit thereof. Hereinafter, the technique of the present disclosure will be further described in detail with reference to the Examples. However, the technique of the present disclosure is not limited to the following Examples.

### 1. Production of precursor particle

MnSO₄·5H₂O, NiSO₄·6H₂O, and CoSO₄-7H₂O were weighed to a target compositional ratio and dissolved in distilled water to a concentration of 1.2 mol/L to obtain a first solution. In a separate container, Na₂CO₃ was dissolved in distilled water to a concentration of 1.2 mol/L to obtain a second solution. The first solution and the second solution, each at 500 mL, were then added dropwise at a rate of about 4 mL/min into a reactor already loaded with 1000 mL of pure water. Upon the completion of the dropwise addition, the mixture was stirred at a stirring rate of 150 rpm at room temperature for 1 h. The precipitate was washed with pure water and subjected to solid-liquid separation with a centrifugal separator. The resulting precipitate was dried overnight at 120 °C and crushed with a mortar, fine particles were removed by airflow classification, and mixed salt particles (precursor particles) comprising Mn, Ni, and Co were obtained. The precursor particles were spherical particles having a circularity of 0.80.

### 2. Production of Na-containing transition metal oxide particle having P2-type structure

### 2.1 In case of spherical shape (Examples 1 and 2 and Comparative Example 1)

Na₂CO₃ and distilled water were weighed to 150 g/L and then stirred to complete dissolution using a stirrer to produce a Na₂CO₃ aqueous solution. The above precursor particles were mixed into the Na₂CO₃ aqueous solution to obtain a slurry. The Na₂CO₃ and the above precursor particles were mixed so as to have a composition of Na_{0.7}Mn_{0.5}Ni_{0.2}Co_{0.3}O₂ after drying. The obtained slurry was dried by spray drying. Specifically, using a spray drying apparatus DL410, under the conditions of a slurry feed rate of 30 mL/min, an inlet temperature of 200 °C, a circulating air volume of 0.8 m³/min, and a spraying air pressure of 0.3 MPa, 90% by area of surfaces of the above precursor particles were coated with Na₂CO₃ to obtain coated particles.

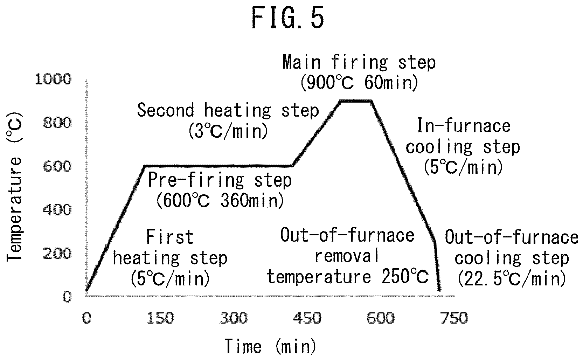

An alumina crucible was used for firing of the coated particles in an electric furnace in an ambient air atmosphere. Specifically, the coated particles were subjected to a "first heating step", a "pre-firing step", a "second heating step", a "main firing step", an "in-furnace cooling step", and an "out-of-furnace cooling step", as indicated in Table 1 below and FIG. 5. Note that the "in-furnace cooling step" refers to a step of cooling inside the electric furnace, and the "out-of-furnace step" means a step of ambient air cooling outside the electric furnace. The fired product was then crushed in a mortar in a dry atmosphere to obtain a Na-containing transition metal oxide (Na₀.₇Mn_{0.5}Ni_{0.2}Co_{0.3}O₂) having a P2-type structure. The Na-containing transition metal oxide was in the form of spherical particles having a circularity of 0.82.

### 2.2 In case of plate-like shape (Reference Example 1 and Comparative Example 2)

Na₂CO₃ and the above precursor particles were weighed in a dry atmosphere so as to have a composition of Na_{0.7}Mn_{0.5}Ni_{0.2}Co_{0.3}O₂ and mixed in a mortar to obtain a mixture. An alumina crucible was used for firing of the mixture in an electric furnace in an ambient air atmosphere. Specifically, the mixture was subjected to a "first heating step", a "pre-firing step", a "second heating step", a "main firing step", an "in-furnace cooling step", and an "out-of-furnace cooling step", as indicated in Table 1 below and FIG. 5. The fired mixture was then crushed in a mortar in a dry atmosphere to obtain a Na-containing transition metal oxide (Na_{0.7}Mn_{0.5}Ni_{0.2}Co_{0.3}O₂) having a P2-type structure. The Na-containing transition metal oxide was in the form of plate-like particles.

**TABLE 1**

| Step | Starting temperature (°C) | Ending temperature (°C) | Time (min) | Heating or cooling rate (°C/min) |
|---|---|---|---|---|
| First heating step | 25 | 600 | 115 | 5 |
| Pre-firing step | 600 | 600 | 360 | 0 |
| Second heating step | 600 | 900 | 100 | 3 |
| Main firing step | 900 | 900 | 60 | 0 |
| In-furnace cooling step | 900 | 250 | 130 | 5 |
| Out-of-furnace cooling step | 250 | 25 | 10 | 22.5 |

### 3. Production of active material having O2-type structure

### 3.1 Example 1 and Reference Example 1

LiOH and LiCl were weighed to a molar ratio of 65:35 and mixed with the P2-type spherical particles (Example 1) or P2-type plate-like particles (Reference Example 1) at a molar ratio 10 times the minimum Li amount required for ion exchange to obtain a mixture. An alumina crucible was used to fire the mixture at 300 °C for 4 h in an ambient air atmosphere to obtain a fired product. The fired product was washed off of any salt remaining thereon with pure water and subjected to solid-liquid separation by vacuum filtration to obtain a precipitate. The precipitate was dried overnight at 120 °C to obtain positive electrode active material particles having an O2-type structure.

### 3.2 Example 2

LiOH and LiNO₃ were weighed to a molar ratio of 60:40 and mixed with the P2-type spherical particles at a molar ratio 10 times the minimum Li amount required for ion exchange to obtain a mixture. An alumina crucible was used to fire the mixture at 300 °C for 1 h in an ambient air atmosphere to obtain a fired product. The fired product was washed off of any salt remaining thereon with pure water and subjected to solid-liquid separation by vacuum filtration to obtain a precipitate. The precipitate was dried overnight at 120 °C to obtain positive electrode active material particles having an O2-type structure.

### 3.3 Comparative Examples 1 and 2

LiCl and LiNO₃ were weighed to a molar ratio of 50:50 and mixed with the P2-type spherical particles (Comparative Example 1) or P2-type plate-like particles (Comparative Example 2) at a molar ratio 10 times the minimum Li amount required for ion exchange to obtain a mixture. An alumina crucible was used to fire the mixture at 280 °C for 1 h in an ambient air atmosphere to obtain a fired product. The fired product was washed off of any salt remaining thereon with pure water and subjected to solid-liquid separation by vacuum filtration to obtain a precipitate. The precipitate was dried overnight at 120 °C to obtain positive electrode active material particles having an O2-type structure.

### 3.4 Supplemental regarding ion exchange conditions

The ion exchange conditions for Examples 1 and 2, Comparative Examples 1 and 2, and Reference Example 1 were summarized in Table 2 below.

**TABLE 2**

| | Shape of P2-tvpe particle | Composition (molar ratio) of ion exchange material | Ion exchange temperature, time |
|---|---|---|---|
| Example 1 | spherical | LiOH:LiCl = 65:35 | 300 °C, 4 h |
| Example 2 | spherical | LiOH:LiNO₃ = 60:40 | 300 °C, 1 h |
| Comparative Example 1 | spherical | LiCl:LiNO₃ = 50:50 | 280 °C, 1 h |
| Comparative Example 2 | plate-like | LiCl:LiNO₃ = 50:50 | 280 °C, 1 h |
| Reference Example 1 | plate-like | LiOH:LiCl = 65:35 | 300 °C, 4 h |

### 4. Observation of exterior shape of positive electrode active material particle

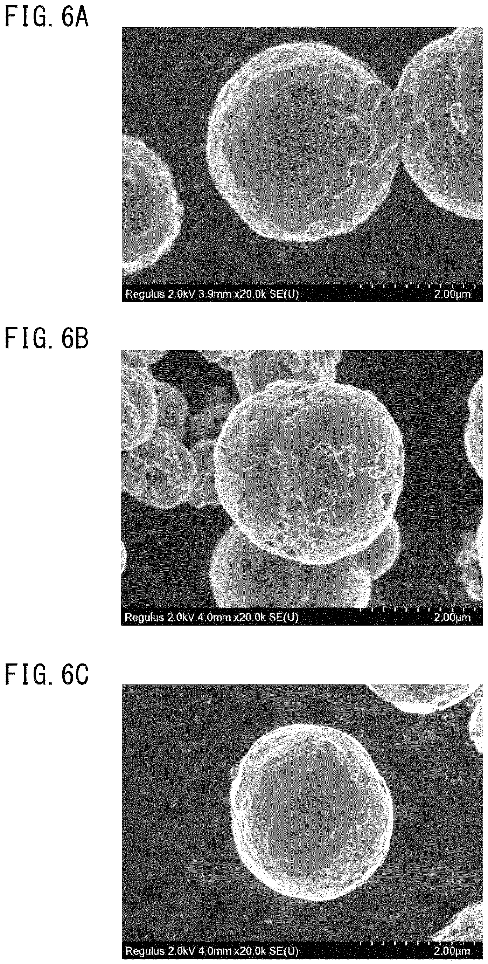

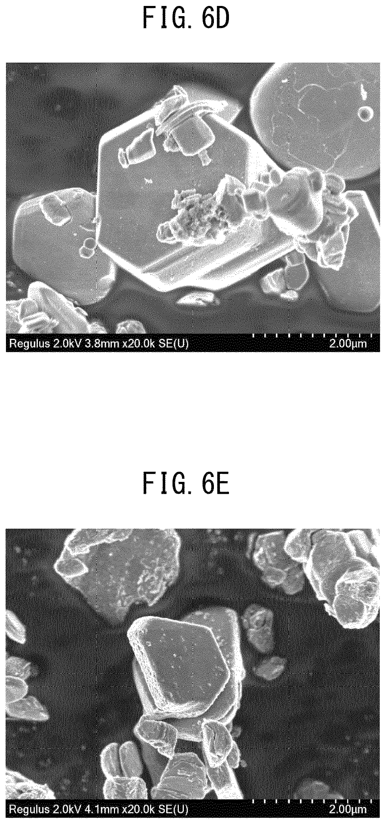

FIGS. 6A to 6E show SEM images of positive electrode active material particles of each of Examples 1 and 2, Comparative Examples 1 and 2, and Reference Example 1. FIG. 6A is for Example 1, FIG. 6B is for Example 2, FIG. 6C is for Comparative Example 1, FIG. 6D is for Comparative Example 2, and FIG. 6E is for Reference Example 1. As shown in FIGS. 6D and 6E, when plate-like P2-type particles were used, positive electrode active material particles having an O2-type structure obtained after ion exchange were also plate-like. As shown in FIGS. 6A to 6C, when spherical P2-type particles were used, positive electrode active material particles have an O2-type structure obtained after ion exchange were also spherical. The circularity of positive electrode active material particles according to Example 1 was 0.83. The circularity of positive electrode active material particles according to Example 2 was 0.81. The circularity of positive electrode active material particles according to Comparative Example 1 was 0.85. Note that the plate-like O2-type positive electrode active material particles were each substantially composed of one crystallite. On the other hand, the surfaces of the spherical O2-type positive electrode active material particles were each composed of a plurality of crystallites. The diameter of the crystallites was less than 1 µm, the crystallites each had a first surface exposed on the particle surface, and the first surface was planar.

### 5. Crystal structure of positive electrode active material particle

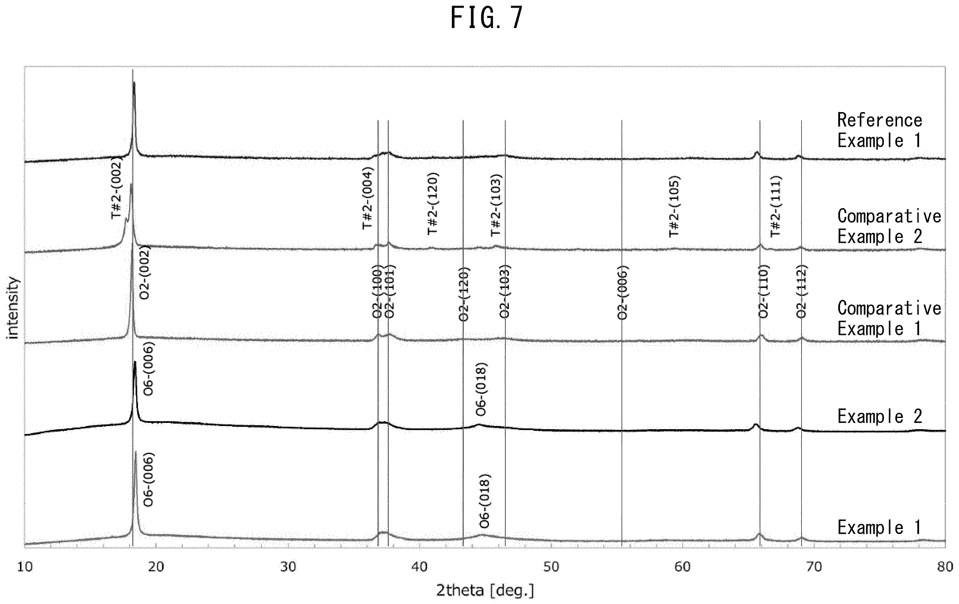

X-ray diffraction measurements were carried out on the positive electrode active material particles in each of Examples 1 and 2, Comparative Examples 1 and 2, and Reference Example 1. Results are shown in FIG. 7. As shown in FIG. 7, all of the positive electrode active material particles had an O2-type crystal structure.

### 6. Elemental analysis of positive electrode active material particle

Elemental analysis by ICP was carried out on the positive electrode active material particles in each of Examples 1 and 2, Reference Example 1, and Comparative Examples 1 and 2. Results are shown in Table 3 below.

**TABLE 3**

| | Molar ratio of each element | | | |
|---|---|---|---|---|
| | Li | Mn | Ni | Co |
| Example 1 | 1.20 | 0.53 | 0.17 | 0.30 |
| Example 2 | 1.16 | 0.53 | 0.18 | 0.29 |
| Comparative Example 1 | 0.65 | 0.53 | 0.17 | 0.30 |
| Comparative Example 2 | 0.63 | 0.53 | 0.17 | 0.30 |
| Reference Example 1 | 1.15 | 0.52 | 0.18 | 0.30 |

### 7. Production of cell for evaluation

The positive electrode active material particles in each of Examples 1 and 2, Comparative Examples 1 and 2, and Reference Example 1 were used to produce a coin cell. The production procedure of the coin cell is as follows.
(1) Positive electrode active material particles, acetylene black (AB) as a conductive aid, and polyvinylidene fluoride (PVdF) as a binder were weighed so as to have a mass ratio of positive electrode active material particles : AB : PVdF = 85:10:5, and dispersed and mixed in N-methyl-2-pyrrolidene to obtain a positive electrode slurry. The positive electrode slurry was applied on an aluminum foil and dried overnight at 120 °C to obtain a positive electrode that was a laminate of a positive electrode active material layer and a positive electrode current collector.
(2) TDDK-217 (manufactured by Daikin) was prepared as an electrolytic solution.
(3) A metallic lithium foil was prepared as a negative electrode.
(4) The positive electrode, the electrolytic solution, and the negative electrode were used to produce a coin cell (CR2032).

### 8. Charge-discharge characteristics evaluation

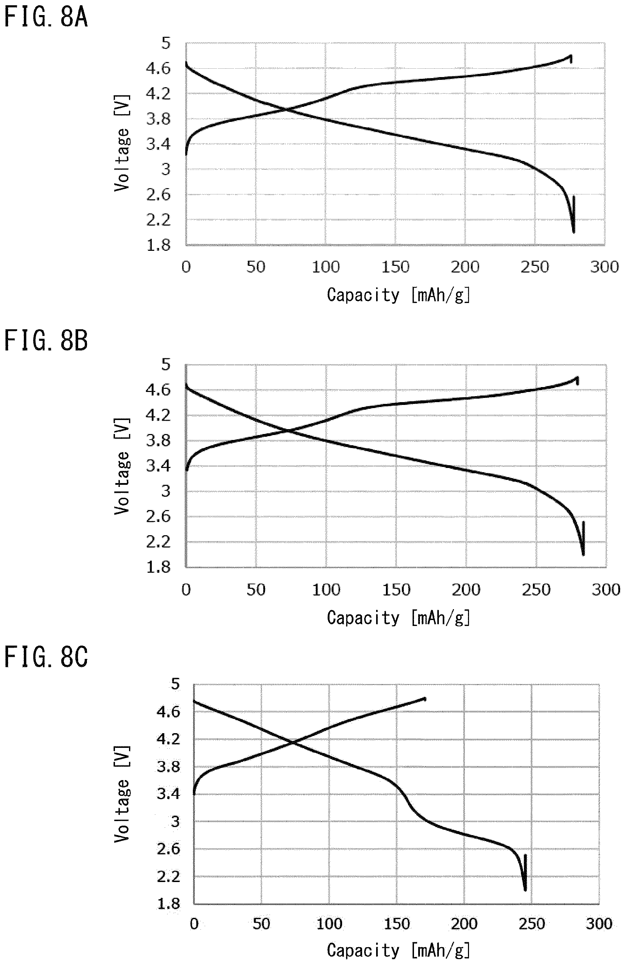

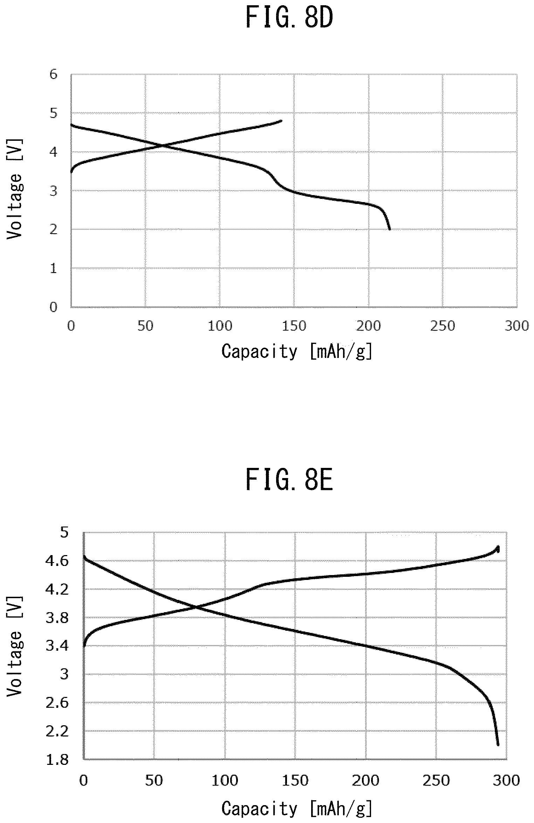

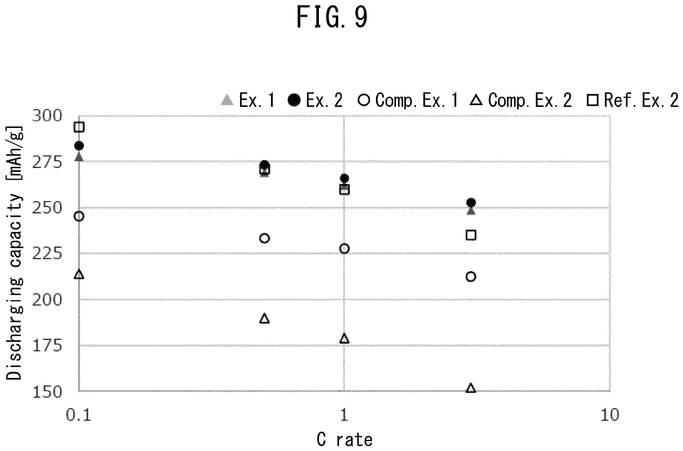

The coin cell was charged at a voltage range of 2.0 to 4.8 V at 0.1 C (1 C = 270 mA/g for Examples 1 and 2 and Reference Example 1, and 1 C = 220 mA/g for Comparative Examples 1 and 2) in an isothermal chamber maintained at 25 °C and then discharged at 0.5 C, 1 C, or 3 C. The discharging capacity at each rate was measured. Results of initial charging-discharging curves are shown in FIGS. 8A to 8E. FIG. 8A is for Example 1, FIG. 8B is for Example 2, FIG. 8C is for Comparative Example 1, FIG. 8D is for Comparative Example 2, and FIG. 8E is for Reference Example 1. Rate characteristics of each cell are shown in FIG. 9.

### 9. Evaluation results

The following was found from the results shown in Table 3, FIGS. 6A to 6E, FIG. 7, FIGS. 8A to 8E, and FIG. 9.
(1) As shown in FIG. 3 and FIG. 7, the positive electrode active material particles according to Examples 1 and 2 and Reference Example 1 had an O2-type structure and comprised Li in excess (1.0 < a). On the other hand, the positive electrode active material particles according to Comparative Examples 1 and 2 had an O2-type structure and a small amount of Li (a < 0.7). Regarding Examples 1 and 2 and Reference Example 1, it is considered that since lithium hydroxide and a lithium salt were used in combination as an ion exchange material, ion exchange was promoted and Li-excess positive electrode active material particles were obtained.
(2) As shown in FIGS. 8A to 8E, the cells according to Examples 1 and 2 and Reference Example 1 had excellent initial charging capacities and initial discharging capacities compared to the cells according to Comparative Examples 1 and 2. Since the cells according to Examples 1 and 2 and Reference Example 1 could supply a larger Li amount to the negative electrode during initial charging than the cells according to Comparative Examples 1 and 2, it is considered that the initial charging capacities were increased. In addition, when a < 0.7 as in Comparative Examples 1 and 2, it is considered that the elements in which valence changes during Li insertion into the positive electrode active material (during discharging) were Ni, Mn, and Co, whereas in the case of a Li-excess positive electrode active material in which 1.0 < a as in Examples 1 and 2 and Reference Example 1, it is considered that oxygen had a contribution in addition to Ni, Mn, and Co. Therefore, it is considered that the initial charging capacities were increased in the cells according to Examples 1 and 2 and Reference Example 1 compared to the cells according to Comparative Examples 1 and 2.
(3) As shown in FIG. 9, it was found that the cells according to Examples 1 and 2 had a smaller difference between the capacity during low-rate discharging and the capacity during high-rate discharging and could maintain a larger capacity during high-rate discharging than the cell according to Reference Example 1. In other words, the cells according to Examples 1 and 2 had more excellent rate characteristics than the cell according to Reference Example 1. It is considered that growth of crystallites was suppressed, crystallites were small, reaction resistance was lowered, and diffusion resistance inside the active material was lowered in the spherical positive electrode active material particles according to Examples 1 and 2 (FIGS. 6A and 6B), compared to the plate-like positive electrode active material particles according to Reference Example 1 (FIG. 6E). Further, it is considered that degree of curvature was decreased by spheroidization, and lithium-ion conduction resistance in layers constituting the positive electrode was lowered. As a result, it is considered that the rate characteristics were improved.

### 10. Supplemental

Although positive electrode active material particles having a specific chemical composition were exemplified in the above Examples, the chemical composition of the positive electrode active material particle of the present disclosure is not limited thereto. For example, the positive electrode active material particle may comprise an additional element M other than Ni, Mn, and Co for the purpose of stabilizing the crystal structure. The element M is as described above.

Although cases where positive electrode active material particles were manufactured using specific ion exchange temperatures and ion exchange times were exemplified in the above Examples, the ion exchange temperature and the ion exchange time are not limited thereto. As far as the present inventors have confirmed, the positive electrode active material particle having an O2-type crystal structure is more easily manufactured properly at an ion exchange temperature of 270 °C or higher and 320 °C or lower for an ion exchange time of 1 h or more and 8 h or less.

### 11. Summary

From the above Examples, a positive electrode active material particle satisfying the following requirements (1) to (3) is said to have excellent rate characteristics and capacity.
(1) The positive electrode active material particle has an O2-type structure.
(2) The positive electrode active material particle has a chemical composition represented by LiₐNa_{b}Mnₓ₋ₚNi_{y-q}Co_{z-r}M_{p+q+r}O₂, wherein 1.0 < a < 1.30; 0 ≤ b ≤ 0.20; x + y + z = 1; and 0 ≤ p + q + r ≤ 0.15, and M is at least one element selected from B, Mg, Al, K, Ca, Ti, V, Cr, Fe, Cu, Zn, Ga, Ge, Sr, Y, Zr, Nb, Mo, and W.
(3) The positive electrode active material particle is spherical.
   From the above Examples and Reference Example, a Li-excess O2-type positive electrode active material particle can be manufactured, for example, by a method satisfying the following requirement (4).
(4) The manufacturing method for a positive electrode active material particle comprises obtaining a Na-containing transition metal oxide particle having a P2-type structure and bringing an ion exchange material into contact with the Na-containing transition metal oxide particle, whereby at least a portion of Na in the Na-containing transition metal oxide particle is substituted with Li, to obtain a Li-containing transition metal oxide particle having an O2-type structure, and the ion exchange material comprises lithium hydroxide and a lithium salt.

### REFERENCE SIGNS LIST

- 100: lithium-ion battery
- 10: positive electrode current collector
- 20: positive electrode active material layer
- 30: electrolyte layer
- 40: negative electrode active material layer
- 50: negative electrode current collector

## Claims

1. A positive electrode active material particle:
having an O2-type structure;
having a chemical composition represented by LiₐNa_{b}Mnₓ₋ₚNi_{y-q}Co_{z-r}M_{p+q+r}O₂, wherein 1.0 < a < 1.30, 0 ≤ b ≤ 0.20, x + y + z = 1, 0 ≤ p + q + r ≤ 0.15, and M is at least one element selected from B, Mg, Al, K, Ca, Ti, V, Cr, Fe, Cu, Zn, Ga, Ge, Sr, Y, Zr, Nb, Mo, and W; and
being spherical.

2. A positive electrode active material particle according to claim 1, wherein
a surface of the particle comprises a plurality of crystallites.

3. A manufacturing method for a positive electrode active material particle, the method comprising:
obtaining a Na-containing transition metal oxide particle having a P2-type structure, and
bringing an ion exchange material into contact with the Na-containing transition metal oxide particle, whereby at least a portion of Na in the Na-containing transition metal oxide particle is substituted with Li, to obtain a Li-containing transition metal oxide particle having an O2-type structure, wherein
the ion exchange material comprises lithium hydroxide and a lithium salt.

4. The manufacturing method according to claim 3, wherein
the Na-containing transition metal oxide particle is spherical, and
the Li-containing transition metal oxide particle is spherical.

5. The manufacturing method according to claim 3 or 4, wherein
the Na-containing transition metal oxide particle has a chemical composition represented by Na_{c}Mnₓ₋ₚNi_{y-q}Co_{z-r}M_{p+q+r}O₂ (0 < c < 0.70; x + y + z = 1; 0 ≤ p + q + r ≤ 0.15, and M is at least one element selected from B, Mg, Al, K, Ca, Ti, V, Cr, Fe, Cu, Zn, Ga, Ge, Sr, Y, Zr, Nb, Mo, and W).

6. The manufacturing method according to any one of claims 3 to 5, the method comprising:
obtaining a precursor particle;
coating a surface of the precursor particle with a Na salt to obtain a coated particle; and
firing the coated particle to obtain the Na-containing transition metal oxide particle.

7. The manufacturing method according to claim 6, the method comprising:
coating 40% by area or greater of the surface of the precursor particle with the Na salt to obtain the coated particle, wherein
the precursor particle is spherical.

8. A lithium-ion battery comprising a positive electrode active material layer, an electrolyte layer, and a negative electrode active material layer, wherein
the positive electrode active material layer comprises the positive electrode active material particle according to claim 1 or 2.
